# EUROPÄISCHE PATENTSCHRIFT

(11) **EP 4 406 881 B1**
(45) Veröffentlichungstag und Bekanntmachung des Hinweises auf die Patenterteilung: **25.06.2025**
(21) Anmeldenummer: 24151887.7
(22) Anmeldetag: 15.01.2024
(51) Int. Cl.: B65G 5/00, E21B 41/00, E21F 15/00, E21F 17/16, B09B 1/00

(54) **VERFAHREN ZUR VERFÜLLUNG VON KAVERNEN**
METHOD FOR FILLING CAVERNS
PROCEDE DE REMPLISSAGE DE CAVERNES

(30) Priorität: 18.01.2023 DE 102023101096
(43) Veröffentlichungstag der Anmeldung: 31.07.2024
(73) Patentinhaber: Eberhard Zimmermann GmbH & Co.KG, 33334 Gütersloh (DE); Storag Etzel GmbH, 26446 Friedeburg (DE)
(72) Erfinder: BISCHOP, Martin, 58313 Herdecke (DE); UERLICH, Christoph, 49413 Dinklage (DE); ZIMMERMANN, Benjamin, 33415 Verl (DE)
(74) Vertreter: Bauer Wagner Pellengahr Sroka

(56) Entgegenhaltungen:
- EP-A1- 1 994 995
- DE-A1- 1 758 780
- DE-A1- 102006 047 036
- US-A- 4 692 061

## Beschreibung

Kavernen, insbesondere Salzkavernen, werden in aller Regel als Produktionskavernen oder Speicherkavernen genutzt. Als Produktionskavernen werden Kavernen verstanden, die zur Gewinnung von Sole, insbesondere Salzsole, mittels Aussolung oder zur Herstellung von Salz aus der Salzsole dienen. Speicherkavernen hingegen dienen zur Speicherung von Gasen, insbesondere Erdgas, Druckluft oder Wasserstoff, sowie von flüssigen Stoffen, insbesondere Erdöl sowie daraus hergestellten Derivaten, beispielsweise Benzin und Heizöl.

Sofern eine Kaverne nach dem Ende der Aussolung zur Herstellung von Sole oder nach dem Ende der Speicherung der genannten Gase oder flüssigen Stoffe final stillgelegt werden soll, sind geeignete Maßnahmen zu ergreifen, um eine Langzeit-Standsicherheit eines hergestellten Hohlraums der Kaverne sicherzustellen und nach behördlicher Freigabe einen Verschluss einer Bohrung zum Hohlraum durchzuführen sowie schließlich eine Oberfläche oberhalb des Hohlraums der Kaverne zu rekultivieren.

Die Kavernen sind dabei in aller Regel mit einem Fluid gefüllt, typischerweise einer Sole. Die Langzeit-Standsicherheit der Kaverne wird dabei bisher in der Regel durch eine Vollaufsalzung der Sole in der Kaverne erreicht. Anschließend erfolgt, nach mehrjähriger Druckkontrolle in der Kaverne, ein Rückbau (Verschluss) der Bohrung. Alternativ besteht aber auch die Möglichkeit, geeignete Feststoffe in einem unteren Bereich des Hohlraums der Kaverne, ggf. aber auch im weit überwiegenden Teil des Hohlraums der Kaverne, als Verfüllmaterial einzubringen und die Sole dort entsprechend zu verdrängen. Vor dem finalen Verschluss der Bohrung erfolgt ebenfalls eine mehrjährige Druckkontrolle in der Kaverne.

Bei den vorstehend genannten geeigneten Feststoffe kann es sich beispielsweise um Abfallstoffe, insbesondere um nicht verwertbare Abfallstoffe, handeln. So werden beispielsweise bei der Müllverbrennung nicht recyclebare Reststoffe in Form von Asche zu einem Verfüllmaterial aufbereitet und in Form eines Schlamms in die Kavernen eingefüllt. Nach der Befüllung mit diesem Verfüllmaterial erfolgt eine mehrjährige Druckkontrolle der Kavernen sowie der Verschluss der Bohrung, an den sich die Rekultivierung der Oberfläche anschließt. Auf diese Weise lassen sich die Abfallstoffe sicher verwahren.

Im Zuge des Einfüllens des Verfüllmaterials in die mit dem Fluid gefüllten Kavernen wird ein Teil des in der Kaverne enthaltenen Fluids, in aller Regel einem dem eingefüllten Volumen des Verfüllmaterials entsprechendes Volumen, aus der Kaverne verdrängt. Infolge eines vorigen Kontakts des Fluids mit dem Verfüllmaterial beim Einfüllen in die Kaverne wird das Fluid kontaminiert und muss entsprechend aufbereitet werden. Sofern es sich bei dem Fluid um Salzsole handelt, wird diese typischerweise mittels eines thermischen Aufbereitungsschritts in Wasser und Salz umgewandelt. Das hierdurch enthaltene Wasser kann anschließend wieder in den natürlichen Wasserkreislauf eingeleitet werden. Das Salz kann ebenfalls weiterverwertet werden. Als problematisch hat es sich jedoch herausgestellt, dass das Salz aufgrund des Kontakts mit dem Verfüllmaterial auch nach der Aufbereitung mit in dem Verfüllmaterial enthaltenen Schadstoffen belastet sein kann.

Verfahren zur Verfüllung von Kavernen sind in einer Vielzahl aus dem Stand der Technik bekannt. Beispielhaft wird auf das deutsche Patent DE 10 2007 595 B4 verwiesen, das ein Verfahren beschreibt, bei dem vor dem Einbringen des Verfüllmaterials eine migrationshemmende Barriereschicht über einem Boden der Kaverne platziert wird. Auf diese Weise soll ein möglicher Schadstoffaustausch zwischen dem Verfüllmaterial und dem in der Kaverne enthaltenen Fluid durch langsam verlaufende Diffusionsvorgänge ablaufen und dadurch möglichst verhindert werden.

Weiterhin ist ein Verfahren aus der deutschen Patentanmeldung DE 10 2006 047 036 A1 bekannt, mit dem sich eine mit Öl gefüllte Salzkaverne entleeren lassen soll. Hierzu soll ein Gas, insbesondere Stickstoff, verwendet werden. Die entsprechende Kavernenspeicheranlage sieht dabei zwei Einzelkavernen vor, die über eine Verrohrung miteinander in Verbindung stehen. In einer ersten, zu entleerenden Kaverne befindet sich beispielsweise Mineralöl. In der zweiten Kaverne ist das Gas enthalten. Um das Mineralöl aus der ersten Kaverne zu entfernen, wird das Gas über die Verrohrung in die erste Kaverne eingeleitet, sodass das Mineralöl aus der ersten Kaverne verdrängt wird. Das Mineralöl wird schließlich über eine Leitung abgeführt.

Weiterhin offenbart die deutsche Patentanmeldung DE 1 758 780 A4 ein Verfahren zum Lagern und Wiederabziehen von Kohlenwasserstoffen in bzw. aus Salzkavernen. Diese liegen in mehreren Phasen vor, insbesondere einer öligen und einer gasförmigen Phase. In einem ersten Schritt wird eine Produktionsflüssigkeit zusammen mit Wasser oder Sole in eine erste Kaverne eingeleitet. Die Produktionsflüssigkeit liegt dabei in Form von Gas und Öl vor. Die beiden Phasen sowie das Wasser bzw. die Sole werden mittels eingestellter Druck- und Temperaturverhältnisse voneinander getrennt. Die abgetrennte Gasphase wird über eine Leitung zu einer Abzapfstelle sowie über eine weitere Leitung in eine dritte Kaverne gefördert. Zugleich wird das Öl aus der ersten Kaverne unter Wirkung des Drucks des Gases durch eine Leitung in eine zweite Kaverne gefördert. Die dritte Kaverne enthält Sole, welche aufgrund des Gasdrucks über eine Leitung in die zweite Kaverne geleitet wird, wodurch das in der zweiten Kaverne enthaltene Öl aus der zweiten Kaverne ausgeleitet und einer Ladestelle zugeleitet wird. Weiterhin wird beschrieben, dass der Ölström ausgehend von der Kaverne unterbrochen werden kann, sodass das Ölvolumen in der Kaverne ansteigt, was zu einer Rückführung der Sole in die Kaverne führt, wodurch wiederum das in der Kaverne enthaltene Gas komprimiert wird. Auf diese Weise soll der nötige Gasdruck erhalten bleiben.

### Aufgabe

Aufgabe der vorliegenden Erfindung ist es mithin, ein alternatives Verfahren zum Verfüllen von Kavernen bereitzustellen, das die aus dem Stand der Technik bekannten Probleme beseitigt.

### Lösung

Die zugrunde liegende Aufgabe wird erfindungsgemäß durch ein Verfahren mit den Merkmalen des Anspruchs 1 gelöst. Vorteilhafte Ausgestaltungen ergeben sich aus den zugehörigen Unteransprüchen.

Das Verfahren sieht eine Mehrzahl von in Reihe geschalteter Kavernen vor, wobei jede der Kavernen zunächst mit einem Fluid gefüllt ist.

Unter "in Reihe geschaltet" wird im Sinne der vorliegenden Anmeldung eine Verschaltung der Kavernen in der Art verstanden, dass die Kavernen so miteinander verbunden sind, dass jede der Kavernen, vorzugsweise mit Ausnahme der ersten und der letzten Kaverne der Reihe, strömungstechnisch mit jeweils einer vorgeschalteten und einer nachgeschalteten Kaverne verbunden ist. Auf diese Weise kann Gas ausgehend von einer ersten Kaverne in eine zweite, der ersten Kaverne nachgeschaltete Kaverne eingeleitet werden, wobei das somit in die zweite Kaverne eingeleitete Gas in eine der zweiten Kaverne wiederum nachgeschaltete, dritte Kaverne eingeleitet werden kann. Die Überführung von Gas in eine nachgeschaltete Kaverne kann dabei so lange erfolgen, bis das Gas eine letzte Kaverne der Reihe erreicht.

Das erfindungsgemäße Verfahren sieht mindestens drei Schritte vor: In einem ersten Schritt des erfindungsgemäßen Verfahrens ist vorgesehen, dass ein Gas in eine erste Kaverne der Reihe eingefüllt wird. In diesem Zuge wird zumindest ein Teil des darin enthaltenen Fluids aus der ersten Kaverne verdrängt. Nach Durchführen des ersten Schrittes ist die erste Kaverne zumindest zum Teil mit einem Gas gefüllt. In einem zweiten Schritt des erfindungsgemäßen Verfahrens wird ein auf Abfallstoffen basierendes Verfüllmaterial in die erste, nunmehr zumindest teilweise mit Gas gefüllte Kaverne der Reihe eingefüllt. Bei den Abfallstoffen kann es sich insbesondere um gefährliche Abfälle handeln, welche vor der Verfüllung in eine Kaverne zu einem Verfüllmaterial in Form eines stichfesten Schlamms aufbereitet wurden. Ebenso kann vorgesehen sein, dass es sich bei dem Verfüllmaterial um staubförmige Abfallstoffe mit oder ohne Bindemitteleigenschaften, stichfeste Filterkuchen und/oder wässrige Flüssigkeiten handelt. Beim Einfüllen des Verfüllmaterials in die erste Kaverne wird zumindest ein Teil des in der Kaverne enthaltenen Gases aufgrund des eingefüllten Verfüllmaterials verdrängt, d.h. aus der ersten Kaverne ausgeleitet. Das verdrängte Gas wird dabei in die in Reihe der ersten Kaverne nachgeschaltete zweite Kaverne der Reihe überführt, d.h. in diese eingeleitet. Nach Durchführen des zweiten Schrittes ist die erste Kaverne somit mit dem Verfüllmaterial gefüllt, während die zweite Kaverne zumindest teilweise mit dem Gas gefüllt ist, welches zunächst in die erste Kaverne eingefüllt wurde. In einem dritten Schritt des erfindungsgemäßen Verfahrens wird weiteres Verfüllmaterial in die zweite, nunmehr mit dem Gas gefüllte Kaverne der Reihe eingefüllt. Als Folge wird zumindest ein Teil des in der zweiten Kaverne der Reihe enthaltenen Gases verdrängt. Nach Durchführen des dritten Schrittes sind somit sowohl die erste Kaverne als auch die zweite Kaverne der Reihe mit Verfüllmaterial gefüllt.

Das erfindungsgemäße Verfahren hat viele Vorteile. Insbesondere lassen sich mittels des Verfahrens die Kavernen der Reihe sukzessive mit Verfüllmaterial verfüllen, ohne dass das in jeder verfüllten Kaverne zunächst enthaltene Fluid mit dem Verfüllmaterial in Kontakt kommt, zu einer vermeintlichen Kontamination des Fluids mit den Abfallstoffen führen und somit eine anschließende Aufbereitung des Fluids nötig machen würde. Vorteilhafter Weise wird bei der Verfüllung jeder Kaverne nämlich unter Nutzung des Gases sichergestellt, dass das in der Kaverne zunächst enthaltene Fluid nicht mit dem Verfüllmaterial in Kontakt kommt. Das eingesetzte Gas wirkt dabei sozusagen als "Puffer" zwischen dem kontaminierten Verfüllmaterial und dem Fluid. Ein Kontakt zwischen dem in jeder Kaverne enthaltenen Fluid und dem Verfüllmaterial kommt lediglich indirekt infolge eines Kontakts zwischen dem Verfüllmaterial und dem Gas zustande. Aufgrund der typischerweise geringen Wechselwirkung von Gas und Verfüllmaterial führt der Kontakt zwischen dem Verfüllmaterial und dem Gas allerdings nicht zu einer Kontamination des in der jeweiligen Kaverne enthaltenen Fluids. Vorteilhafter Weise lässt sich mittels des erfindungsgemäßen Verfahrens somit eine Kontamination des in den Kavernen enthaltenen Fluids vermeiden.

Sofern das Gas infolge eines Kontakts mit dem Verfüllmaterial dennoch kontaminiert sein sollte, muss dieses zwar analog zum Stand der Technik aufbereitet bzw. fachgerecht entsorgt werden. Allerdings beschränkt sich die Menge des aufzubereitenden Gases trotz der Befüllung mindestens zweier Kavernen auf ein Volumen des zunächst in die Kaverne eingefüllten, unter Druck stehenden Gases, mithin maximal auf ein Volumen der ersten Kaverne der Reihe. Die Menge des aufzubereitenden Gases kann mithin im Vergleich zum Stand der Technik erheblich reduziert werden.

Sowohl bei der Befüllung der ersten Kaverne mit Gas als auch bei der Befüllung der zweiten Kaverne mit Gas kann vorzugsweise vorgesehen sein, dass die jeweilige Kaverne nicht vollständig mit dem Gas befüllt wird. Vielmehr kann es zweckmäßig sein, einen vorbestimmten Anteil des Fluids in der jeweiligen Kaverne zu verwahren. Dies ist insbesondere im Hinblick auf eine spätere Durchführung einer Kontrolle des in der jeweiligen Kaverne vorherrschenden Drucks vorteilhaft. Gleiches gilt für die Befüllung der Kavernen mit dem Verfüllmaterial. Auch in diesem Fall kann vorzugsweise vorgesehen sein, dass ein vorbestimmter Anteil des Fluids in der jeweiligen Kaverne verbleibt.

Eine vorzugsweise Ausgestaltung der Erfindung sieht ferner vor, dass die Reihe von Kavernen mindestens drei Kavernen umfasst, wobei das aus der zweiten Kaverne verdrängte Gas in eine der zweiten Kaverne nachgeschaltete dritte Kaverne überführt wird. Die dritte Kaverne ist dabei ebenfalls mit einem Fluid gefüllt. Beim Überführen des Gases in die nachgeschaltete dritte Kaverne wird zumindest ein Teil des in der nachgeschalteten dritten Kaverne enthaltenen Fluids aus dieser verdrängt. Das aus der dritten Kaverne beim Überführen des Gases aus der zweiten Kaverne in die dritte Kaverne verdrängte Fluid kann dabei entsprechend weiterverwertet und/oder aufbereitet werden. Die dritte Kaverne lässt sich anschließend ebenfalls mit Verfüllmaterial befüllen, ohne dass das Verfüllmaterial mit dem Fluid in Kontakt kommt. Im Zuge des Befüllens der dritten Kaverne wird das in dieser enthaltene Gas ebenfalls verdrängt.

Vorzugsweise kann ferner vorgesehen sein, dass die Reihe von Kavernen mindestens vier Kavernen umfasst, wobei sukzessive Verfüllmaterial in die dritte sowie alle der dritten Kaverne nachgeschalteten Kavernen der Reihe unter Verdrängung des zum Zeitpunkt des Einfüllens in der jeweiligen Kaverne enthaltenen Gases in eine jeweilig nachgeschaltete Kaverne eingefüllt wird und hieraus resultierend das in der jeweiligen nachgeschalteten Kaverne enthaltene Fluid zumindest teilweise aus der nachgeschalteten Kaverne verdrängt wird. Mit anderen Worten wird das zu Beginn in die erste Kaverne eingefüllte Gas kaskadenartig mit jeder Befüllung einer Kaverne in eine nachgeschaltete Kaverne verdrängt, wodurch die nachgeschaltete Kaverne wiederum unter Verdrängung des Gases befüllbar gemacht wird, ohne einen Kontakt zwischen dem. Vorteilhafter Weise lassen sich somit eine Mehrzahl von Kavernen mit Verfüllmaterial befüllen, ohne dass das in den Kavernen zu Beginn enthaltene Fluid mit dem Verfüllmaterial in Kontakt kommt. Das in der Kaverne enthaltene Fluid wird vielmehr zuvor infolge der Überführung des Gases in eine jeweilige Kaverne aus dieser verdrängt und kommt lediglich mit dem Gas in Kontakt.

Die Kavernen können mithin der Reihe nach mit Verfüllmaterial gefüllt werden. Hierbei wird bei jedem Befüllen der jeweiligen Kaverne mit Verfüllmaterial das in der zu befüllenden Kaverne enthaltene Gas in eine nachgeschaltete Kaverne überführt, die anschließend ebenfalls mit Verfüllmaterial gefüllt wird, wodurch das Gas in eine dieser Kaverne nachgeschaltete Kaverne überführt wird. Wenn die letzte Kaverne mit dem Verfüllmaterial gefüllt wird, wird das Gas aus der letzten Kaverne verdrängt, sodass alle Kavernen der Reihe mit Verfüllmaterial gefüllt sind. Auch in diesem Fall beschränkt sich die Menge des ggf. aufzubereitenden Gases vorteilhafter Weise auf das Volumen des zunächst in die erste Kaverne der Reihe unter Druck eingefüllten Gases.

Eine weitere vorzugsweise Ausgestaltung der Erfindung sieht ferner vor, dass das Gas nach der Verdrängung aus der letzten Kaverne der Reihe aus der letzten Kaverne verdrängt und zur Aufbereitung in eine Aufbereitungsanlage überführt wird. Das aus der letzten Kaverne verdrängte Gas wird somit vorzugsweise in keine weitere Kaverne überführt. In der Aufbereitungsanlage wird das Gas derart aufbereitet, dass dieses bedenkenlos in die Umwelt ausgeblasen werden kann. Die Aufbereitung des Gases kann dabei vorzugsweise thermisch und/oder biologisch, weiter vorzugsweise mittels Katalysatoren, Molekularsieben und/oder Kondensatoren erfolgen. Ebenso ist jedoch auch denkbar, das Gas unmittelbar in die Umwelt auszublasen und/oder ohne eine vorige Aufbereitung weiter zu verwerten.

Gemäß einer vorzugsweisen Ausgestaltung der Erfindung kann vorgesehen sein, dass ein Volumen des aus einer jeweiligen Kaverne verdrängten Fluids einem Volumen des in die der jeweiligen Kaverne vorgeschaltete Kaverne eingefüllten Gases entspricht. Dabei ist als Volumen des Gases das Volumen zu verstehen, welches das unter Druck stehende Gas aufweist. Typischerweise weist eine durchschnittliche Kaverne ein Fassungsvermögen in einem Bereich von etwa 100.000 m³ bis 800.000 m³ auf. Dabei kann vorzugsweise vorgesehen sein, dass die erste Kaverne vollständig mit Gas verfüllt wird, wobei das Gas vorzugsweise mit einem Druck von 100 bis 200 bar in die Kaverne eingeleitet wird. Ebenso kann jedoch auch vorgesehen sein, die Kaverne nicht vollständig mit dem Gas zu verfüllen, sondern einen bestimmten Anteil des Volumens der Kaverne mit dem Fluid, insbesondere der Salzsole, befüllt zu lassen. Dies kann insbesondere nötig sein, um eine spätere mehrjährige Druckkontrolle in der Kaverne durchführen zu können. Sofern das gesamte in eine Kaverne gefüllte Gas in eine nachgeschaltete Kaverne überführt wird, wird eine dem Volumen des Gases entsprechende Menge des in der nachgeschalteten Kaverne enthaltenen Fluids aus der nachgeschalteten Kavern verdrängt. Auf diese Weise kann das gesamte Volumen des Gases zur Befüllung aller Kavernen genutzt werden, wobei nach dem Überführen in eine nachgeschaltete Kaverne ggf. eine erneute Verdichtung des Gases nötig ist.

Gemäß einer vorzugsweisen Ausgestaltung der Erfindung ist ferner vorgesehen, dass ein Volumen des aus der einer jeweiligen Kaverne verdrängten Gases einem Volumen des in die der jeweiligen Kaverne vorgeschaltete Kaverne eingefüllten Verfüllmaterials entspricht. Mit anderen Worten wird immer genau so viel Gas aus einer Kaverne verdrängt, wie auch Verfüllmaterial in die vorgeschaltete Kaverne eingefüllt wurde. Dies setzt voraus, dass die jeweilige einer Kaverne nachgeschaltete Kaverne stets mindestens dasselbe Volumen aufweist wie die vorangegangene Karverne. Vorzugsweise kann auch vorgesehen sein, dass die Volumina der Kavernen in steigender Reihenfolge der Kavernen ansteigen.

Vorzugsweise kann dabei vorgesehen sein, dass ein Volumen des in die erste Kaverne eingefüllten Gases einem Volumen des in die erste Kaverne eingefüllten Verfüllmaterials entspricht und das Gas im Zuge des Einfüllens des Verfüllmaterials in die erste Kaverne vollständig in die zweite Kaverne überführt wird. In diesem Fall entspricht das Volumen des aus der zweiten Kaverne verdrängten Fluids dem Volumen des in die erste Kaverne eingefüllten Gases.

Vorzugsweise kann ferner vorgesehen sein, dass das in den Kavernen enthaltene Fluid Salzsole umfasst oder daraus besteht. Die Verwendung von Salzsole als das in den Kavernen enthaltene Fluid hat sich insbesondere bei einer Verfüllung von Kavernen in Form von Salzkavernen als besonders vorteilhaft erwiesen, da die Salzsole besonders einfach mithilfe von Wasser im Zuge einer Aussolung der Salzkaverne herstellbar und somit schnell verfügbar ist. Auf diese Weise muss kein zusätzliches Fluid in die Kaverne eingeleitet werden. Sofern die zur Verfüllung vorgesehenen Kavernen zur Verhinderung eines Zusammenbruchs bereits mit Salzsole gefüllt ist, kann diese vorteilhafter Weise verwendet werden.

Eine weitere vorzugsweise Ausgestaltung der Erfindung sieht vor, dass das in die erste Kaverne eingeleitete Gas ein Inertgas ist. Die Verwendung eines Inertgases stellt sicher, dass das Gas beim Kontakt mit dem Verfüllstoff - im Gegensatz zu einem Fluid in Form einer Salzsole - nicht oder lediglich geringfügig kontaminiert wird. Auf diese Weise wird die Aufbereitung des aus der jeweiligen Kaverne ausgeleiteten Fluids vereinfacht oder kann gänzlich entfallen. Als einzusetzendes Inertgas kommt beispielsweise Stickstoff oder ein Edelgas wie Helium, Neon, Argon, Krypton, Xenon, Radon oder eine Mischung aus den vorgenannten Gasen infrage. Ebenso wäre jedoch auch die Verwendung von Erdgas oder Kohlendioxid denkbar.

Vorzugsweise kann weiter vorgesehen sein, dass das in allen Kavernen enthaltene Fluid ein Gas ist, wobei das Gas vorzugsweise ein Inertgas ist. Alternativ zu einer Verfüllung der Kavernen mit Salzsole kann somit ebenso vorgesehen sein, dass alle Kavernen mit einem Gas gefüllt sind, sodass beim Einfüllen des Verfüllmaterials in die erste Kaverne Gas aus der Kaverne verdrängt wird, welches in eine zweite, nachgeschaltete Kaverne überführt wird, was wiederum eine Verdrängung eines in der nachgeschalteten Kaverne enthaltenen Gases zur Folge hat. Aufgrund des typischen Fassungsvermögens von Kavernen im einem Bereich von etwa 100.000 m³ bis etwa 800.000 m³ hat sich die Verwendung von Gas als das in den Kavernen enthaltenen Fluids jedoch als besonders kostenintensiv erwiesen. Aus wirtschaftlichen Gründen kann die Verwendung von einem kostengünstigeren Fluid, insbesondere von Salzsole, in den in Reihe geschalteten Kavernen somit bevorzugt sein.

Eine weitere vorzugsweise Ausgestaltung sieht vor, dass das aus einer jeweiligen Kaverne verdrängte Fluid aufbereitet wird. Sofern es sich bei dem Fluid beispielsweise um Salzsole handelt, kann diese bei einer entsprechenden Einleiterlaubnis in ein Meer, beispielsweise die Nordsee, eingeleitet werden. Ebenso kann jedoch vorgesehen sein, dass das Fluid zunächst derart aufbereitet wird, dass eine gefahrlose Einleitung des Gases in die Umwelt ermöglicht ist.

Eine weitere vorzugsweise Ausgestaltung der Erfindung sieht vor, dass die in Reihe geschalteten Kavernen eine erste Gruppe bilden, die mit mindestens einer weiteren Gruppe von einer Mehrzahl in Reihe geschalteter Kavernen derart verschaltet ist, dass das in einer Kaverne enthaltene Gas ausgehend von dieser Kaverne jeweils in eine nachgeschaltete Kaverne der ersten und/oder der zweiten Gruppe überführt werden kann. Somit kann vorgesehen sein, dass zwei Gruppen von in Reihe geschalteter Kavernen vorliegen, wobei einer Kaverne nachgeschaltete Kavernen beider Gruppen jeweils strömungstechnisch mit der jeweiligen vorgeschalteten Kaverne verbunden sind. Mit anderen Worten kann vorgesehen sein, dass das aus der ersten Kaverne verdrängte Gas gleichermaßen in eine zweite, der ersten Gruppe zugeordnete Kaverne und/oder in eine zweite, der zweiten Gruppe zugeordnete Kaverne einleitbar ist. Das im weiteren Verlauf aus der zweiten Kaverne der ersten und/oder zweiten Gruppe verdrängte Gas kann in eine dritte, der ersten Gruppe und/oder eine dritte, der zweiten Gruppe zugeordnete Kaverne eingeleitet werden. Die Verdrängung von Gas und anschließende Überführung in eine nachgeschaltete Kaverne wird so lange fortgeführt, bis die letzte Kaverne der Gruppen erreicht wird. Auf diese kann vorteilhafter Weise sichergestellt werden, dass das Gas auch dann aus einer jeweiligen Kaverne einer Gruppe verdrängt und in eine nachgeschaltete Kaverne überführt werden kann, wenn die nachgeschaltete Kaverne derselben Gruppe beispielsweise aus Wartungszwecken nicht zur Verfüllung geeignet ist. In diesem Fall kann auf eine nachgeschaltete Kaverne der jeweils anderen Gruppe ausgewichen werden.

Dabei kann vorzugsweise vorgesehen sein, dass die erste Kaverne der ersten Gruppe der ersten Kaverne der zweiten Gruppe und die letzte Kaverne der ersten Gruppe der letzten Kaverne der zweiten Gruppe entspricht. Ausgehend von der ersten Kaverne lässt sich das in dieser enthaltene Gas somit in eine nachgeschaltete Kaverne der ersten Gruppe und/oder der zweiten Gruppe überführen, wobei die Überführung des in einer jeweiligen Kaverne enthaltenen Gases in einer letzten Kaverne endet, die strömungstechnisch mit sowohl einer vorgeschalteten Kaverne der ersten Gruppe als auch einer vorgeschalteten Kaverne der zweiten Gruppe verbunden ist. Auf diese Weise können die zwischen der ersten und der letzten Kaverne angeordneten Kavernen jeweils ausgetauscht werden, sofern eine Kaverne einer Gruppe nicht verfüllbar sein sollte. Dennoch wird in einem letzten Schritt des Verfahrens vorteilhafter Weise lediglich das in der letzten Kaverne enthaltene Gas aus der letzten Kaverne verdrängt.

Für die Durchführung des erfindungsgemäßen Verfahren kann sich insbesondere ein Zusammenschlusses einer Mehrzahl von Kavernen eignen, sofern die Kavernen des Zusammenschlusses dabei derart in Reihe geschaltet sind, dass ein in einer ersten Kaverne enthaltenes Gas ausgehend von der ersten Kaverne sukzessive in Reihe dieser Kaverne nachgeschaltete Kavernen einleitbar ist. Dabei entspricht ein Volumen einer jeweiligen Kaverne mindestens einem Volumen einer der jeweiligen Kaverne vorgeschalteten Kaverne, übersteigt das Volumen vorzugsweise. Mit anderen Worten kann vorgesehen sein, dass alle Kavernen in ihrem Volumen identisch sind. Ebenso kann jedoch auch vorgesehen sein, dass sich die Kavernen in ihrem Volumen vergrößern oder verkleinern. Auf diese Weise kann sichergestellt werden, dass das gesamte Volumen des in die erste Kaverne eingeleiteten Gases sukzessive in die dieser Kaverne nachgeschaltete Kavernen einleitbar ist. Für den Fall, dass sich die Kavernen sukzessiv in ihrem Volumen vergrößern, kann vorgesehen sein, dass nicht nur das in einer vorgeschalteten Kaverne enthaltene Gas in eine nachgeschaltete Kaverne überführt wird. Vielmehr kann es auch nötig sein, der nachgeschalteten Kaverne weiteres Gas zuzuführen, um das für die Verfüllung der Kaverne mit Verfüllmaterial erforderliche Gasvolumen unter Berücksichtigung des benötigten Gasdrucks bereit stellen zu können. Gleiches gilt für den Fall, dass eine nachgeschaltete Kaverne in ihrem Volumen gegenüber einer vorgeschalteten Kaverne verringert ist. In einem solchen Fall muss die Menge des in die nachgeschaltete Kaverne zu überführenden Gases verringert werden.

Die Schaltung der Kavernen ermöglicht es somit, das in die erste Kaverne eingeleitete Gas von Kaverne zu Kaverne zu überführen. Auf diese Weise lassen sich alle Kavernen des Zusammenschlusses nacheinander verfüllen, wobei bei jeder Verfüllung das in der jeweiligen Kaverne enthaltene Fluid aus der Kaverne verdrängt wird. Im Zuge der Verfüllung der letzten Kaverne kann schließlich das Gas aus dieser Kaverne verdrängt werden. Die Aufbereitung des Gases kann dabei vorzugsweise thermisch und/oder biologisch, weiter vorzugsweise mittels Katalysatoren, Molekularsieben und/oder Kondensatoren erfolgen.

### Ausführungsbeispiele

Das erfindungsgemäße Verfahren wird nachstehend anhand von Ausführungsbeispielen, die in den Figuren dargestellt sind, näher erläutert. Es zeigt:
- Fig. 1:: Einen Ausgangszustand eines Zusammenschlusses umfassend zwei Kavernen.
- Fig. 2:: Einen ersten Schritt des erfindungsgemäßen Verfahrens.
- Fig. 3:: Einen zweiten Schritt des erfindungsgemäßen Verfahrens.
- Fig. 4:: Einen dritten Schritt des erfindungsgemäßen Verfahrens.
- Fig. 5:: Einen Endzustand des Zusammenschlusses aus Figur 1.
- Fig. 6:: Einen weiteren Zusammenschluss umfassend drei Kavernen.
- Fig. 7:: Den ersten Schritt des erfindungsgemäßen Verfahrens in Bezug auf den Zusammenschluss aus Figur 4.
- Fig. 8:: Den zweiten Schritt des erfindungsgemäßen Verfahrens in Bezug auf den Zusammenschluss aus Figur 4.
- Fig. 9:: Den dritten Schritt des erfindungsgemäßen Verfahrens in Bezug auf den Zusammenschluss aus Figur 4.
- Fig. 10:: Einen vierten Schritt des erfindungsgemäßen Verfahrens in Bezug auf den Zusammenschluss aus Figur 4.
- Fig. 11:: Einen Endzustand des Zusammenschlusses aus Figur 4.
- Fig. 12:: Einen weiteren Zusammenschluss mit zehn Kavernen.

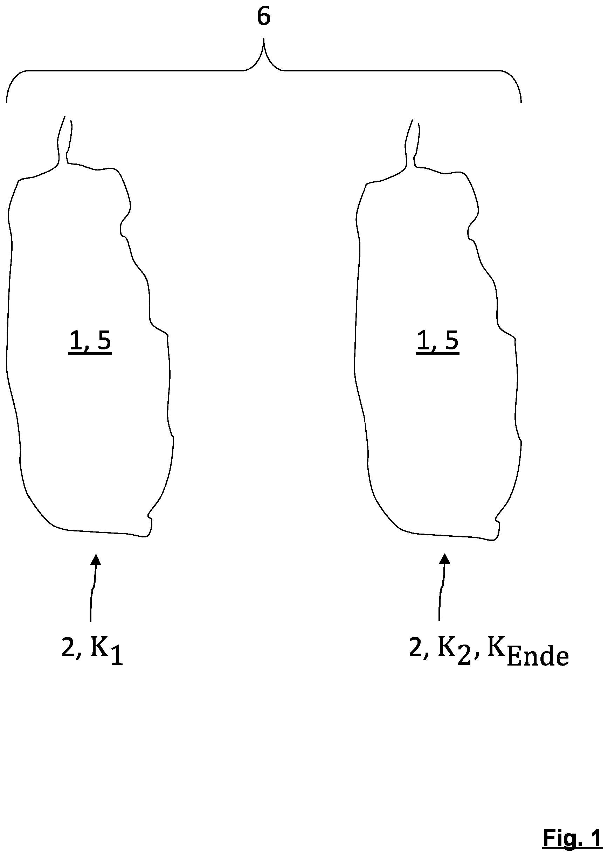

Ein Zusammenschluss **6** von zwei in Reihe geschalteten Kavernen **2, K₁, K₂** ist in den **Figuren 1 bis 5** gezeigt. Die Kavernen **2, K₁, K₂** sind dabei in ihrem Volumen identisch ausgebildet. In der **Figur 1** ist ein Ausgangszustand der Kavernen **2, K₁, K₂** gezeigt. In dem Ausgangszustand sind die Kavernen **2, K₁, K₂** jeweils vollständig mit einem Fluid **1,** beispielsweise Salzsole **5,** gefüllt.

Die beiden Kavernen **2, K₁, K₂** sind derart strömungstechnisch miteinander verbunden, dass ein in die erste Kaverne **2, K₁** eingefülltes Gas **4** ausgehend von dieser Kaverne **2, K₁** in die nachgeschaltete, zweite und damit letzte Kaverne **2, K₂**, **K_{Ende}** der Reihe überführbar ist, wobei das in die zweite Kaverne **2, K₂**, **K_{Ende}** überführte Gas **4** ausgehend von der zweiten Kaverne **2, K₂, K_{Ende}** aus dieser Kaverne **2, K₂**, **K_{Ende}** ausleitbar ist. Die Art der strömungstechnischen Verbindung ist in den Figuren nicht gezeigt. Die strömungstechnische Verbindung kann jedoch in Form geeigneter Leitungen vorliegen, die die Kavernenköpfe dieser beiden Kavernen geeignet verbinden.

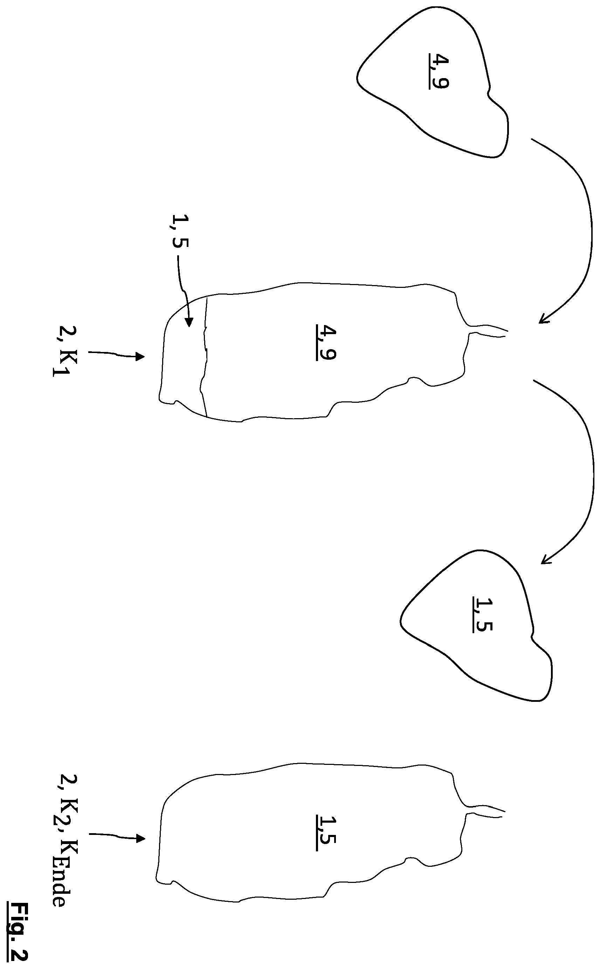

In einem ersten Schritt des erfindungsgemäßen Verfahrens, welcher in **Figur 2** gezeigt ist, wird ein Gas **4** in die erste Kaverne **2, K₁** eingeleitet. Bei dem Gas **4** handelt es sich um ein Inertgas **7.** Auf diese Weise wird eine Wechselwirkung, insbesondere eine Kontamination des Gases **4** mit in einem in die erste Kaverne **2, K₁** einzufüllenden Verfüllmaterial **3** enthaltenen Abfallstoffen, soweit wie möglich verhindert. Im Zuge der Einleitung des Inertgases **7** in die erste Kaverne 2, **K₁** wird das in der ersten Kaverne **2, K₁** enthaltene Fluid **1** zumindest zu einem Teil verdrängt und aus der ersten Kaverne **2, K₁** ausgeleitet. Ein Volumen des aus der ersten Kaverne **2, K₁** verdrängten Fluids **1** entspricht dabei einem Volumen der unter Druck in die erste Kaverne **2, K₁** eingeleiteten Gases **4.** Die erste Kaverne **2, K₁** wird dabei nicht vollständig mit dem Inertgas **7** gefüllt. Vielmehr verbleibt ein geringer Anteil des Fluids **1** in der ersten Kaverne **2, K₁** und dient dazu, eine Druckkontrolle in der Kaverne **2, K₁** durchführen zu können. Nach Abschluss des ersten Schritts des Verfahrens ist die erste Kaverne **2, K₁** zumindest teilweise mit Gas **4** gefüllt.

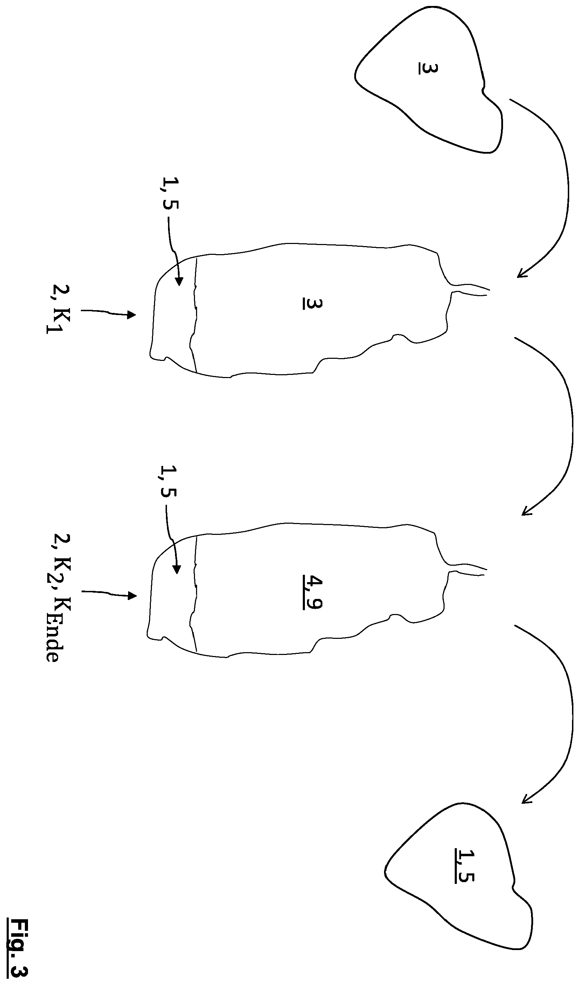

In einem zweiten Schritt des erfindungsgemäßen Verfahrens, welcher in der **Figur 3** gezeigt ist, wird das Verfüllmaterial **3,** welches auf Abfallstoffen basiert, in die erste, nunmehr mit dem Inertgas **7** gefüllte Kaverne **2, K₁** eingefüllt. Als Folge wird das in der ersten Kaverne **2, K₁** enthaltene Inertgas **7** verdrängt und in die zweite Kaverne **2, K₂**, **K_{Ende}** überführt. Das in der zweiten Kaverne **2, K₂**, **K_{Ende}** enthaltene Fluid **1** wird aufgrund der Einleitung des Inertgases **7** aus der zweiten Kaverne **2, K₂**, **K_{Ende}** verdrängt und ausgeleitet. Nach Abschluss des zweiten Schritts ist die erste Kaverne **2, K**₁ mit dem Verfüllmaterial **3** befüllt, während die zweite Kaverne **2, K₂**, **K_{Ende}** mit dem Inertgas **7** befüllt ist. Die erste Kaverne **2, K₁** kann anschließend verpropft werden.

Mangels eines Kontakts des im Zuge des ersten und zweiten Verfahrensschritts aus der jeweiligen Kaverne **2, K₁**, **K₂** ausgeleiteten Fluids **1** mit dem Verfüllmaterial **3** und einer somit weitestgehend verhinderten Kontamination des Fluids 1 mit in dem Verfüllmaterial **3** enthaltenen gefährlichen Stoffen kann das aus der ersten Kaverne **2, K₁** bzw. aus der zweiten Kaverne **2, K₂** ausgeleitete Fluid **1,** insbesondere wenn es sich bei dem Fluid 1 um Salzsole **5** handelt, beispielsweise in ein Meer abgeleitet werden. Ebenso kann vorgesehen sein, das Fluid **1** wirtschaftlich weiterzuverwenden. Eine Aufbereitung des Fluids **1** ist somit vorteilhafter Weise nicht notwendig.

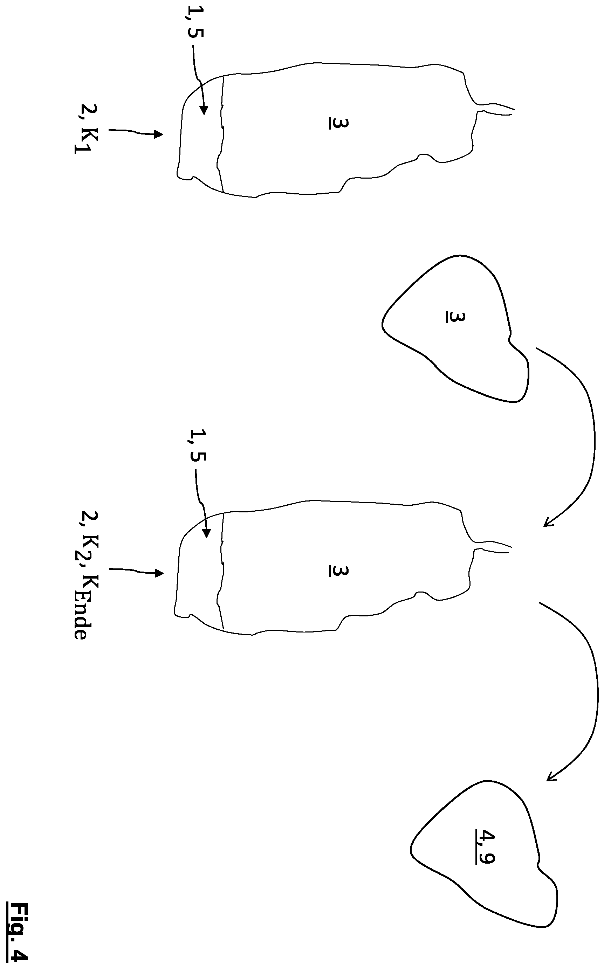

In einem dritten Verfahrensschritt, welcher in der **Figur 4** gezeigt ist, kann nunmehr die zweite und damit letzte Kaverne **2, K₂**, **K_{Ende}** des Zusammenschlusses **6** ebenfalls mit weiterem Verfüllmaterial **3** befüllt werden. In diesem Zug wir das in der zweiten Kaverne **2, K₂**, **K_{Ende}** enthaltene Inertgas **7** aus der zweiten Kaverne **2, K₂**, **K_{Ende}** ausgeleitet. Da es sich bei dem Gas **4** um ein Inertgas **7** handelt, welches nicht oder lediglich geringfügig mit dem Verfüllmaterial **3** wechselwirkt, kann das Inertgas **7** unter voriger Aufbereitung in die Atmosphäre ausgeblasen werden. Ebenso kann vorgesehen sein, das Gas **4** weiter zu verwenden.

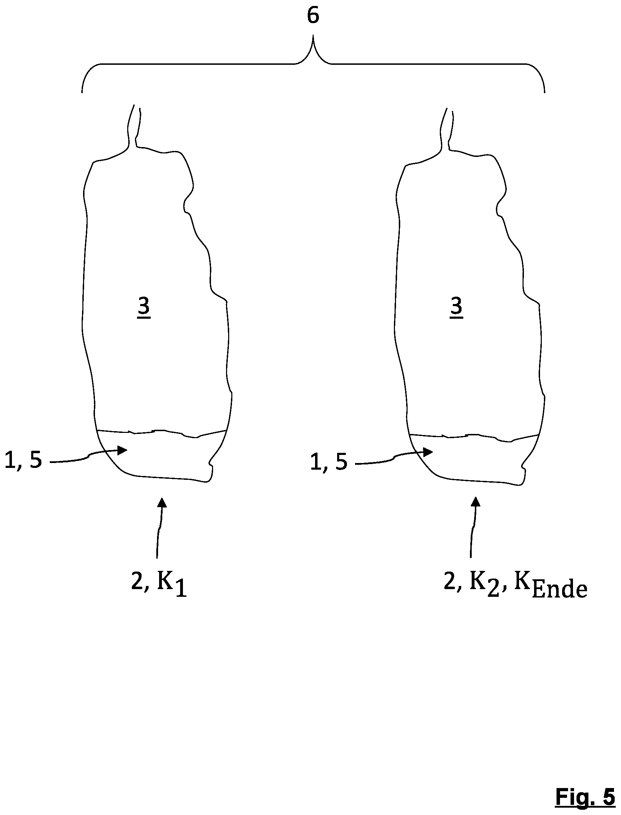

In einem Endzustand, welcher in der **Figur 5** gezeigt ist, sind beide Kavernen **2, K₁**, **K₂**, _{Ende} mit dem Verfüllmaterial **3** befüllt, wobei beide Kavernen **2, K₁**, **K₂** für eine spätere Druckkontrolle zumindest teilweise das Fluid **1** enthalten.

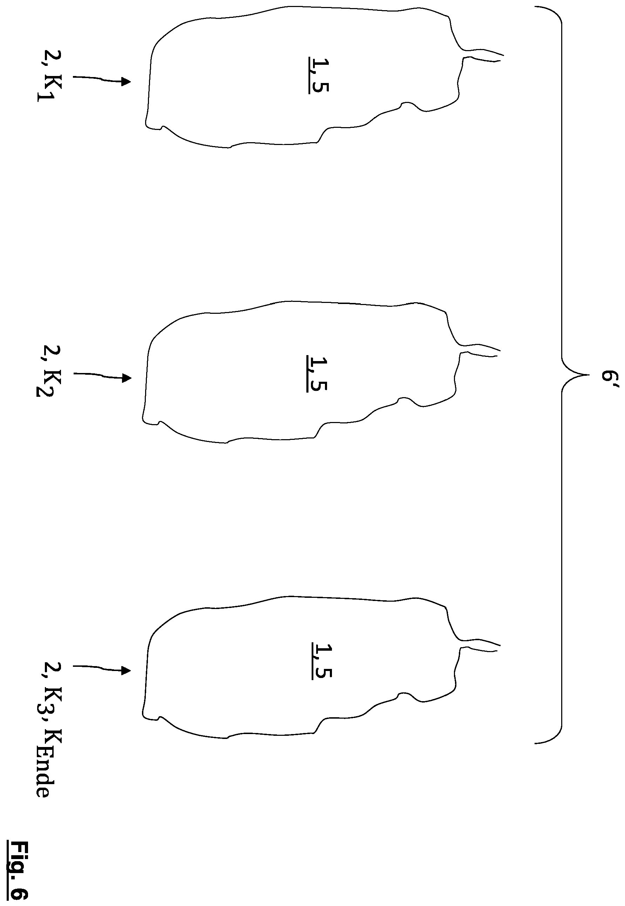

Ein weiterer Zusammenschluss **6'** ist in den **Figuren 6 bis 11** gezeigt. Der Zusammenschluss **6'** umfasst drei in ihrem Volumen identische, in Reihe geschaltete Kavernen 2, **K₁**, **K₂**, **K₃**. Im Ausgangszustand, welcher in der **Figur 6** gezeigt ist, sind die Kavernen **2, K₁**, **K₂**, **K₃** jeweils vollständig mit einem Fluid 1, beispielsweise Salzsole **5,** gefüllt.

Die drei Kavernen **2, K₁**, **K₂**, **K₃** sind derart strömungstechnisch miteinander verbunden, dass ein in die erste Kaverne **2, K₁** eingefülltes Gas **4** ausgehend von dieser Kaverne **2, K₁** in eine nachgeschaltete, zweite Kaverne **2, K₂** überführbar ist, wobei das in die zweite Kaverne **2, K₂** überführte Gas **4** ausgehend von der zweiten Kaverne **2, K₂** in eine nachgeschaltete, dritte Kaverne **2, K₃**, **K_{Ende}** einleitbar ist. Die dritte Kaverne **2, K,. K_{Ende}** ist dabei die letzte Kaverne **2, K₃**, **K_{Ende}** der Reihe.

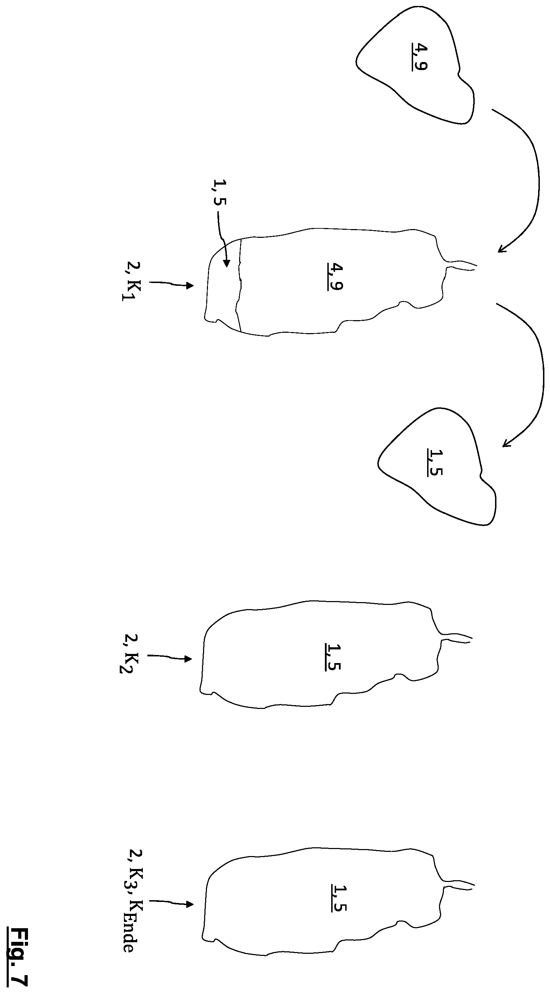

In einem ersten Schritt des erfindungsgemäßen Verfahrens, welcher in **Figur 7** gezeigt ist, wird ein Gas **4** in Form eines Inertgases 7 in die erste Kaverne 2, **K₁** eingeleitet. Im Zuge der Einleitung des Gases **4** wird das in der ersten Kaverne **2, K₁** enthaltene Fluid **1** zu einem Teil verdrängt und aus der ersten Kaverne **2, K₁** ausgleitet. Auf diese Weise wird die erste Kaverne **2, K₁** mit dem Gas **4** gefüllt, wobei das in der ersten Kaverne **2, K₁** enthaltene Fluid **1** nicht vollständig aus der Kaverne **2** verdrängt wird. Vielmehr ist vorgesehen, dass ein geringer Anteil in der ersten Kaverne **2, K₁** verbleibt und sich in einem unteren Bereich der Kaverne **2, K₁** ansammelt.

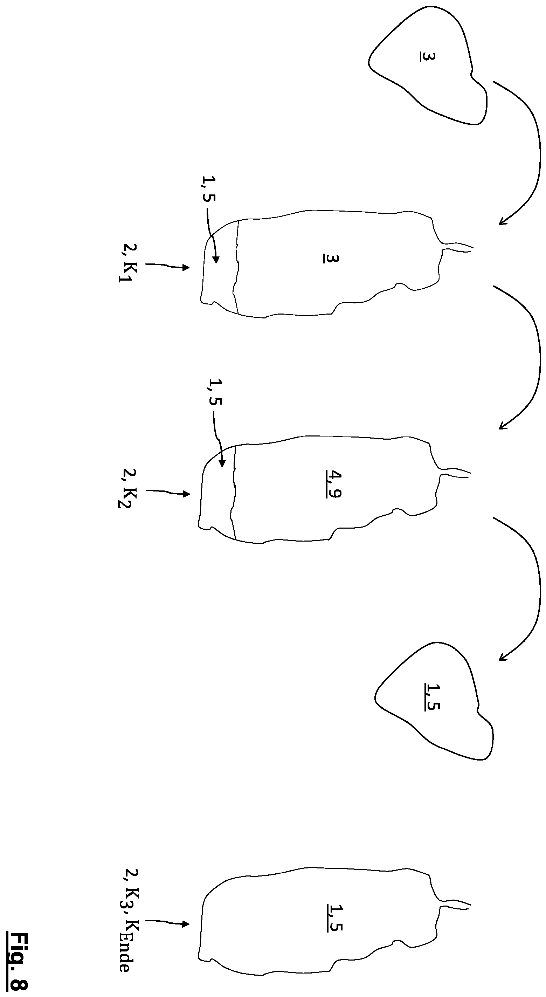

In einem zweiten Schritt des erfindungsgemäßen Verfahrens, welcher in der **Figur 8** gezeigt ist, wird das Verfüllmaterial **3,** welches auf Abfallstoffen basiert, in die erste, nunmehr mit dem Gas **4** gefüllte Kaverne **2, K₁** eingefüllt. Als Folge wird das in der ersten Kaverne **2, K₁** enthaltene Gas **4** verdrängt und in die zweite Kaverne **2, K₂** überführt. Das in der zweiten Kaverne **2, K₂** enthaltene Fluid **1** wird aufgrund der Einleitung des Gases 4 aus der zweiten Kaverne **2, K₂** verdrängt und aus der zweiten Kaverne **2, K₂** ausgeleitet. Mangels eines Kontakts des aus der zweiten Kaverne **2, K₂** ausgeleiteten Fluids **1** mit dem Verfüllmaterial **3** und einer somit verhinderten Kontamination des Fluids **1** mit in dem Verfüllmaterial **3** enthaltenen gefährlichen Stoffen kann das ausgeleitete Fluid **1,** insbesondere wenn es sich bei dem Fluid **1** um Salzsole **5** handelt, beispielsweise in ein Meer abgeleitet werden. Ebenso kann vorgesehen sein, das Fluid **1** wirtschaftlich weiterzuverwenden. Eine Aufbereitung des Fluids 1 ist somit vorteilhafter Weise nicht notwendig. Die erste Kaverne **2, K₁** kann schließlich verpropft werden.

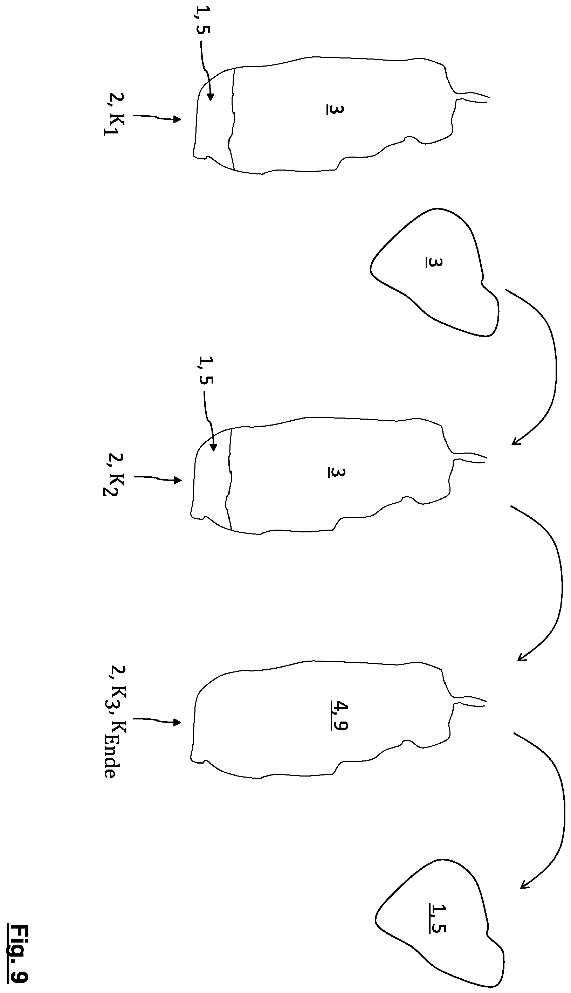

Das zunächst in die erste Kaverne 2, **K₁** eingeleitete Gas **4** befindet sich nunmehr in der zweiten Kaverne **2, K₂**, welche ebenfalls mit dem Verfüllmaterial **3** verfüllt werden kann, wie in der **Figur 9** gezeigt ist. Im Zuge der Einleitung des Verfüllmaterials **3** in die zweite Kaverne **2, K₂** wird das darin enthaltene Gas **4** aus der zweiten Kaverne **2, K₂** in die dritte Kaverne **2, K₃** eingeleitet, woraufhin das in der dritten Kaverne **2, K₃** enthaltene Fluid 1 aus der dritten Kaverne **2, K₃** ausgeleitet wird.

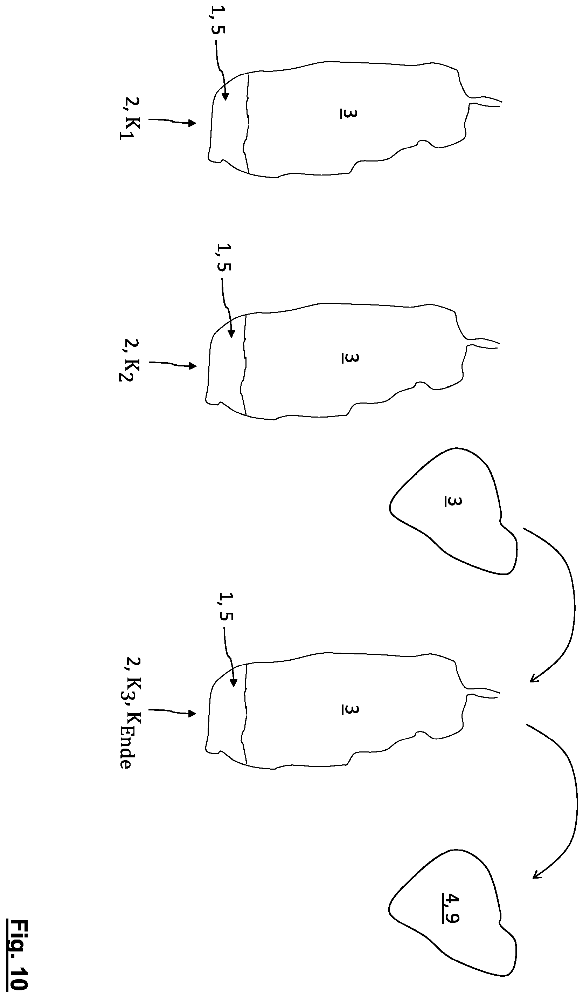

Schließlich kann auch die dritte Kaverne **2, K₃**, **K_{Ende}** mit Verfüllmaterial **3** verfüllt werden. Im Gegenzug wird das in der dritten Kaverne **2, K₃**, **K_{Ende}** enthaltene Gas **4** aus dieser Kaverne **2, K₃**, **K_{Ende}** ausgeleitet. Dieser Verfahrensschritt ist in der **Figur 10** gezeigt.

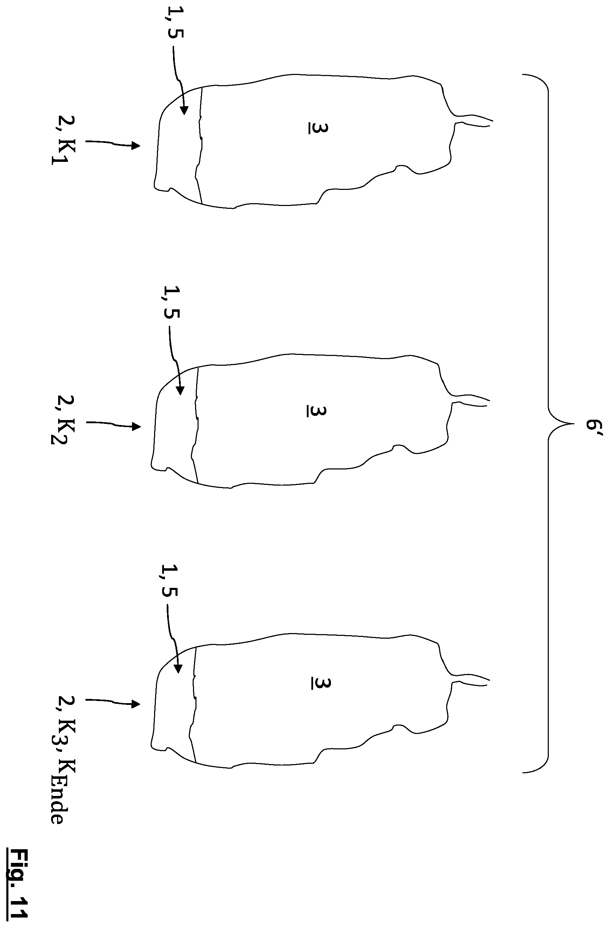

Ein Endzustand des Zusammenschlusses **6,** in dem alle drei Kavernen 2, **K₁**, **K₂**, **K₃** der Reihe mit Verfüllmaterial **3** gefüllt sind, ist in der **Figur 11** gezeigt.

Vorteilhafter Weise wird aufgrund der kaskadenartigen Verschiebung des Gases zwischen den Kavernen **2, K₁**, **K₂**, **K₃** ein Kontakt zwischen Verfüllmaterial **3** und Fluid **1** verhindert. Das Verfüllmaterial **3** kommt stets nur mit dem Gas **4** in Kontakt. Da es sich bei dem Gas **4** um ein Inertgas **7** handelt, ist auch eine Kontamination des Gases **4** weitestgehend verhindert bzw. stark verringert. Auf diese Weise können die ausgeleitete Salzsole **5** wie auch das Inertgas **7** besonders einfach weiterverwertet oder unter voriger Aufbereitung in die Umwelt geleitet werden. Weiterhin vorteilhaft ist, dass das zunächst in die erste Kaverne **2, K₁** eingefüllte Gas **4** kaskadenartig in eine jeweils nachgeschaltete Kaverne **2** überführt wird, sobald eine der Kavernen **2** mit Verfüllmaterial **3** befüllt wird. Auf diese Weise kann das Gas **4,** welches als "Puffer" wirkt, wiederverwendet werden.

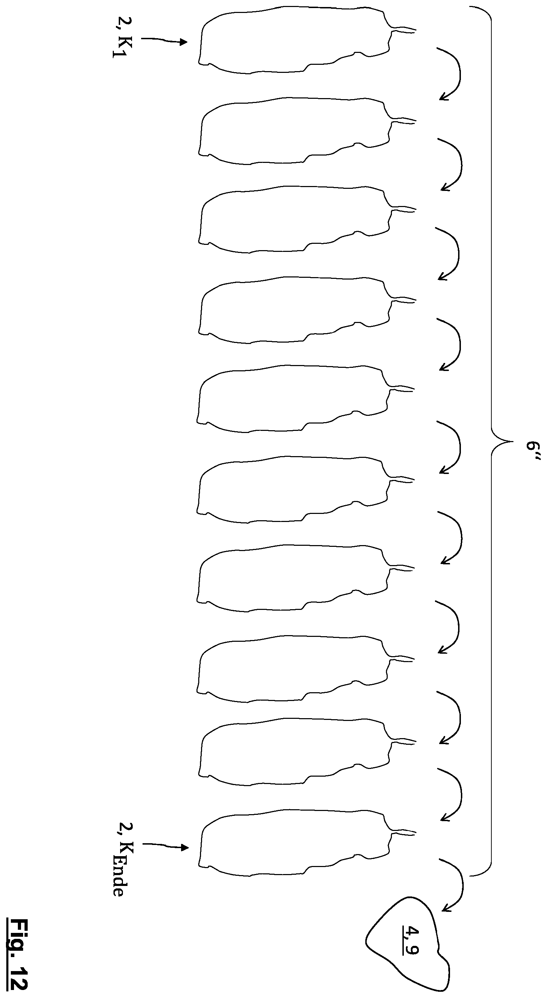

Ein weiterer Zusammenschluss **6"** ist in der **Figur 12** gezeigt. Der Zusammenschluss **6"** umfasst zehn in ihrem Volumen identische, in Reihe geschaltete Kavernen **2,** welche mit einem Fluid 1 gefüllt sind. In einem ersten Verfahrensschritt des Verfahrens wird die erste Kaverne **2, K₁** mit einem Gas **4** verfüllt, wodurch das in der ersten Kaverne **2, K₁** enthaltene Fluid 1 ausgeleitet wird. Infolge einer sukzessiven Verfüllung der Kavernen, angefangen mit der ersten mit Gas **4** befüllten Kaverne **2, K₁**, mit Verfüllmaterial **3** wird das Gas **4** kaskadenartige von einer Kaverne **2** zu einer jeweils nachgeschalteten Kaverne **2** überführt, bis letztlich das Fluid 1 aus der zehnten und letzten Kaverne **2, K_{Ende}** ausgeleitet wird, ohne in eine weitere Kaverne **2** überführt zu werden. In einem Endzustand sind alle Kavernen **2** der Reihe mit dem Verfüllmaterial **3** befüllt.

### Bezugszeichenliste

- 1: Fluid
- 2: Kaverne
- 3: Verfüllmaterial
- 4: Gas
- 5: Salzsole
- 6, 6', 6": Zusammenschluss
- 7: Inertgas
- K₁: erste Kaverne
- K₂: zweite Kaverne
- K₃: dritte Kaverne
- K_{Ende}: letzte Kaverne

## Patentansprüche

1. Verfahren zur Verfüllung einer Mehrzahl von in Reihe geschalteter, jeweils mit einem Fluid (1) gefüllter Kavernen (2, K₁, K₂) mit einem auf Abfallstoffen basierenden Verfüllmaterial (3), mit den folgenden Verfahrensschritten:
- Einfüllen von Gas (4) in eine erste Kaverne (2, K₁) unter Verdrängung zumindest eines Teils des in der ersten Kaverne (2, K₁) enthaltenen Fluids (1);
- Einfüllen des Verfüllmaterials (3) in die erste Kaverne (2, K₁), wobei beim Einfüllen des Verfüllmaterials (3) in die erste Kaverne (2, K₁) zumindest ein Teil des in der ersten Kaverne (2, K₁) enthaltenen Gases (4) verdrängt und in eine zweite Kaverne (2, K₂) der Reihe überführt wird, wobei beim Überführen des Gases (4) in die zweite Kaverne (2, K₂) zumindest ein Teil des in der zweiten Kaverne (2, K₂) enthaltenen Fluids (1) verdrängt wird;
- Einfüllen weiteren Verfüllmaterials (3) in die zweite mit Gas (4) gefüllte Kaverne (2, K₂), wobei beim Einfüllen des Verfüllmaterials (3) in die zweite Kaverne (2, K₂) zumindest ein Teil des in der zweiten Kaverne (2, K₂) enthaltenen Gases (4) verdrängt wird.

2. Verfahren nach Anspruch 1, **dadurch gekennzeichnet, dass** die Reihe von Kavernen (2, K₁, K₂, K₃) mindestens drei Kavernen (2, K₁, K₂, K₃) umfasst, wobei das aus der zweiten Kaverne (2, K₂) verdrängte Gas (4) in eine der zweiten Kaverne (2, K₂) nachgeschaltete dritte Kaverne (2, K₁, K₂, K₃) überführt wird, wobei beim Überführen des Gases (4) in die dritte Kaverne (2, K₃) zumindest ein Teil des in der dritten Kaverne (2, K₃) enthaltenen Fluids (1) aus dieser verdrängt wird.

3. Verfahren nach Anspruch 2, **dadurch gekennzeichnet, dass** die Reihe von Kavernen (2, K₁, K₂, K₃) mindestens vier Kavernen (2, K₁, K₂, K₃) umfasst, wobei sukzessive Verfüllmaterial (3) in die dritte sowie alle der dritten Kaverne (2, K₃) nachgeschalteten Kavernen (2) der Reihe unter Verdrängung des zum Zeitpunkt des Einfüllens in der jeweiligen Kaverne (2, K₁, K₂, K₃) enthaltenen Gases (4) in eine jeweilig nachgeschaltete Kaverne (2, K₁, K₂, K₃) eingefüllt wird und hieraus resultierend das in der jeweilig nachgeschalteten Kaverne (2, K₁, K₂, K₃) enthaltene Fluid (1) zumindest teilweise aus der nachgeschalteten Kaverne (2, K₁, K₂, K₃) verdrängt wird.

4. Verfahren nach einem der Ansprüche 1 bis 3, **dadurch gekennzeichnet, dass** das Gas (4) im Zuge der Verfüllung der letzten Kaverne (2, K_{Ende}) der Reihe aus der letzten Kaverne (2, K_{Ende}) verdrängt und zur Aufbereitung in eine Aufbereitungsanlage überführt wird.

5. Verfahren nach einem der vorhergehenden Ansprüche, **dadurch gekennzeichnet, dass** ein Volumen des aus der einer jeweiligen Kaverne (2, K₁, K₂, K₃) verdrängten Fluids (1) einem Volumen des in die der jeweiligen Kaverne (2, K₁, K₂, K₃) vorgeschaltete Kaverne (2, K₁, K₂, K₃) eingefüllten Gases (4) entspricht.

6. Verfahren nach einem der vorhergehenden Ansprüche, dass ein Volumen des aus der einer jeweiligen Kaverne (2, K₁, K₂, K₃) verdrängten Gases (4) einem Volumen des in die der jeweiligen Kaverne (2, K₁, K₂, K₃) vorgeschaltete Kaverne (2, K₁, K₂, K₃) eingefüllten Verfüllmaterials (3) entspricht.

7. Verfahren nach einem der vorhergehenden Ansprüche, **dadurch gekennzeichnet, dass** das in den Kavernen (2, K₁, K₂, K₃) enthaltene Fluid (1) Salzsole (5) umfasst oder daraus besteht.

8. Verfahren nach einem der vorhergehenden Ansprüche, **dadurch gekennzeichnet, dass** das in die erste Kaverne (2, K₁) eingefüllte Gas (4) ein Inertgas ist.

9. Verfahren nach einem der vorhergehenden Ansprüche, **dadurch gekennzeichnet, dass** das in allen Kavernen (2, K₁, K₂, K₃) enthaltene Fluid (1) ein Gas (4) ist, wobei das Gas (4) vorzugsweise ein Inertgas ist.

10. Verfahren nach einem der vorhergehenden Ansprüche, **dadurch gekennzeichnet, dass** das aus einer jeweiligen Kaverne (2, K₁, K₂, K₃) verdrängte Fluid (1) aufbereitet wird.

11. Verfahren nach einem der vorhergehenden Ansprüche, **dadurch gekennzeichnet, dass** die in Reihe geschalteten Kavernen (2, K₁, K₂, K₃) eine erste Gruppe bilden, die mit mindestens einer weiteren Gruppe von einer Mehrzahl in Reihe geschalteter Kavernen (2, K₁, K₂, K₃) derart verschaltet ist, dass das in einer Kaverne (2, K₁, K₂, K₃) enthaltene Gas (4) ausgehend von dieser Kaverne (2, K₁, K₂, K₃) jeweils in eine nachgeschaltete Kaverne (2, K₁, K₂, K₃) der ersten und/oder der zweiten Gruppe überführt werden kann.

12. Verfahren nach Anspruch 11, **dadurch gekennzeichnet, dass** die erste Kaverne (2, K₁) der ersten Gruppe der ersten Kaverne (2) der zweiten Gruppe und die letzte Kaverne (2, K_{Ende}) der ersten Gruppe der letzten Kaverne (2) der zweiten Gruppe entspricht.

## Claims

1. Method for filling a plurality of caverns (2, K₁, K₂) that are connected in series and respectively filled with a fluid (1) with a fill material (3) based on waste materials, with the following method steps:
- Filling a first cavern (2, K₁) with gas (4), whereby at least part of the fluid (1) contained in the first cavern (2, K₁) is displaced;
- Filling the first cavern (2, K₁) with the fill material (3), wherein during the filling of the first cavern (2, K₁) with the fill material (3) at least part of the gas (4) contained in the first cavern (2, K₁) is displaced and transferred into a second cavern (2, K₂) of the series, wherein during the transfer of the gas (4) into the second cavern (2, K₂) at least part of the fluid (1) contained in the second cavern is displaced;
- Filling the second cavern (2, K₂) filled with gas (4) with further fill material (3), wherein during the filling of the second cavern (2, K₂) with the fill material (3) at least part of the gas (4) contained in the second cavern (2, K₂) is displaced.

2. The method according to claim 1, **characterized in that** the series of caverns (2, K₁, K₂, K₃) includes at least three caverns (2, K₁, K₂, K₃), wherein the gas (4) displaced from the second cavern (2, K₂) is transferred into a third cavern (2, K₁, K₂, K₃) downstream of the second cavern (2, K₂), wherein during the transfer of the gas (4) into the third cavern (2, K₃) at least part of the fluid (1) contained in the third cavern (2, K₃) is displaced.

3. The method according to claim 2, **characterized in that** the series of caverns (2, K₁, K₂, K₃) includes at least four caverns (2, K₁, K₂, K₃), wherein the third cavern and all caverns (2) of the series downstream of the third cavern (2, K₃) are successively filled with fill material (3), whereby the gas (4) contained in each cavern (2, K₁, K₂, K₃) at the time of filling is displaced into a respective downstream cavern (2, K₁, K₂, K₃) and, as a result, the fluid (1) contained in the respective downstream cavern (2, K₁, K₂, K₃) is at least partially displaced from the downstream cavern (2, K₁, K₂, K₃).

4. The method according to one of claims 1 to 3, **characterized in that** the gas (4) is displaced from the last cavern (2, K_{Ende}) of the series in the course of the filling of the last cavern (2, K_{Ende}) and transferred to a processing plant for processing.

5. The method according to one of the preceding claims, **characterized in that** a volume of the fluid (1) displaced from a given cavern (2, K₁, K₂, K₃) corresponds to a volume of the gas (4) filled into the cavern (2, K₁, K₂, K₃) upstream of that given cavern (2, K₁, K₂, K₃).

6. The method according to one of the preceding claims, **characterized in that** a volume of the gas (4) displaced from a given cavern (2, K₁, K₂, K₃) corresponds to a volume of the fill material (3) filled into the cavern (2, K₁, K₂, K₃) upstream of that given cavern (2, K₁, K₂, K₃).

7. The method according to one of the preceding claims, **characterized in that** the fluid (1) contained in the caverns (2, K₁, K₂, K₃) includes or consists of brine (5).

8. The method according to one of the preceding claims, **characterized in that** the gas (4) filled into the first cavern (2, K₁) is an inert gas.

9. The method according to one of the preceding claims, **characterized in that** the fluid (1) contained in all the caverns (2, K₁, K₂, K₃) is a gas (4), wherein the gas (4) is preferably an inert gas.

10. The method according to one of the preceding claims, **characterized in that** the fluid (1) displaced from a given cavern (2, K₁, K₂, K₃) is treated.

11. The method according to one of the preceding claims, **characterized in that** the caverns (2, K₁, K₂, K₃) connected in series form a first group which is connected to at least one further group consisting of a plurality of caverns (2, K₁, K₂, K₃) connected in series, wherein the two groups are connected in such a manner that the gas (4) contained in a cavern (2, K₁, K₂, K₃) can be transferred from this cavern (2, K₁, K₂, K₃) into a respective downstream cavern (2, K₁, K₂, K₃) of the first and/or second group.

12. The method according to claim 11, **characterized in that** the first cavern (2, K₁) of the first group corresponds to the first cavern (2) of the second group and the last cavern (2, K_{Ende}) of the first group corresponds to the last cavern (2) of the second group.

## Revendications

1. Procédé, destiné à remplir une pluralité de cavernes (2, K₁, K₂) montées en série, remplies chacune d'un fluide (1) avec une matière de remplissage (3) basée sur des matières résiduelles, avec les étapes de procédé suivantes, consistant à :
- charger du gaz (4) dans une première caverne (2, K₁) en refoulant au moins une partie du fluide (1) contenu dans la première caverne (2, K₁) ;
- charger la première caverne (2, K₁) avec de la matière de remplissage (3), lors du chargement de la matière de remplissage (3) dans la première caverne (2, K₁), au moins une partie du gaz (4) contenu dans la première caverne (2, K₁) étant refoulée et transférée dans une deuxième caverne (2, K₂) de la série, lors du transfert du gaz (4) dans la deuxième caverne (2, K₂), au moins une partie du fluide (1) contenu dans la deuxième caverne (2, K₂) étant refoulée ;
- charger la deuxième caverne (2, K₂) remplie de gaz (4) de matière de remplissage (3) supplémentaire, lors du chargement de la matière de remplissage (3) dans la deuxième caverne (2, K₂), au moins une partie du gaz (4) contenu dans la deuxième caverne (2, K₂) étant refoulée.

2. Procédé selon la revendication 1, **caractérisé en ce que** la série de cavernes (2, K₁, K₂, K₃) comprend au moins trois cavernes (2, K₁, K₂, K₃), le gaz (4) refoulé hors de la deuxième caverne (2, K₂) étant transféré dans une troisième caverne (2, K₁, K₂, K₃) montée en aval de la deuxième caverne (2, K₂) lors du transfert du gaz (4) dans la troisième caverne (2, K₃), au moins une partie du fluide (1) contenu dans la troisième caverne (2, K₃) étant refoulée hors de celui-ci.

3. Procédé selon la revendication 2, **caractérisé en ce que** la série de cavernes (2, K₁, K₂, K₃) comprend au moins quatre cavernes (2, K₁, K₂, K₃), de la matière de remplissage (3) successive étant chargée dans la troisième, ainsi que dans toutes les cavernes (2) de la série montées en aval de la troisième caverne (2, K₃), sous refoulement du gaz (4) contenu au moment du chargement dans la caverne (2, K₁, K₂, K₃) respective dans une caverne (2, K₁, K₂, K₃) respectivement montée en aval et au résultat de ce qui précède, le fluide (1) contenu dans la (2, K₁, K₂, K₃) respectivement montée en aval étant refoulé au moins partiellement hors de la caverne (2, K₁, K₂, K₃) montée en aval.

4. Procédé selon l'une quelconque des revendications 1 à 3, **caractérisé en ce qu'**au cours du chargement de la dernière caverne (2, K_{Ende}) de la série, le gaz (4) est refoulé hors de la dernière caverne (2, K_{Ende}) et pour son traitement, est transféré dans une phase de traitement.

5. Procédé selon l'une quelconque des revendications précédentes, **caractérisé en ce qu'**un volume du fluide (1) refoulé hors de la caverne (2, K₁, K₂, K₃) respective correspond à un volume du gaz (4) chargé dans la caverne (2, K₁, K₂, K₃) montée en amont de la caverne (2, K₁, K₂, K₃) respective.

6. Procédé selon l'une quelconque des revendications précédentes, **caractérisé en ce qu'**un volume du gaz (4) refoulé hors de la caverne (2, K₁, K₂, K₃) respective correspond à un volume de la matière de remplissage (3) chargée dans la caverne (2, K₁, K₂, K₃) montée en amont de la caverne (2, K₁, K₂, K₃) respective.

7. Procédé selon l'une quelconque des revendications précédentes, **caractérisé en ce que** le fluide (1) contenu dans les cavernes (2, K₁, K₂, K₃) comprend de la saumure (5) ou est constitué de cette dernière.

8. Procédé selon l'une quelconque des revendications précédentes, **caractérisé en ce que** le gaz (4) chargé dans la première caverne (2, K₁) est un gaz inerte.

9. Procédé selon l'une quelconque des revendications précédentes, **caractérisé en ce que** le fluide (1) contenu dans toutes les cavernes (2, K₁, K₂, K₃) est un gaz (4), le gaz (4) étant de préférence un gaz inerte.

10. Procédé selon l'une quelconque des revendications précédentes, **caractérisé en ce que** le fluide (1) refoulé hors de la caverne (2, K₁, K₂, K₃) respective est traité.

11. Procédé selon l'une quelconque des revendications précédentes, **caractérisé en ce que** les cavernes (2, K₁, K₂, K₃) montées en série forment un premier groupe, que l'on commute avec au moins un groupe supplémentaire d'une pluralité de cavernes (2, K₁, K₂, K₃) montées en série, de telle sorte qu'en partant de ladite caverne (2, K₁, K₂, K₃), le gaz (4) contenu dans une caverne (2, K₁, K₂, K₃) puisse être transféré à partir de celle-ci, chaque fois dans une caverne (2, K₁, K₂, K₃) montée en aval du premier et / ou du deuxième groupe.

12. Procédé selon la revendication 11, **caractérisé en ce que** la première caverne (2, K₁) du premier groupe correspond à la première caverne (2) du deuxième groupe et la dernière caverne (2, K_{Ende}) du premier groupe correspond à la dernière caverne (2) du deuxième groupe.
